# EUROPÄISCHE PATENTSCHRIFT

(11) **EP 3 393 856 B1**
(45) Veröffentlichungstag und Bekanntmachung des Hinweises auf die Patenterteilung: **18.09.2019**
(21) Anmeldenummer: 16812937.7
(22) Anmeldetag: 15.12.2016
(51) Int. Cl.: B60R 11/00, B60R 11/02, B60K 35/00, B60K 37/06, B60K 37/00

(54) **KRAFTFAHRZEUG MIT SCHALTTAFELMODUL**
MOTOR VEHICLE WITH A CONTROL PANEL MODULE
VÉHICULE AUTOMOBILE COMPRENANT UN MODULE DE TABLEAU DE BORD

(30) Priorität: 22.12.2015 DE 102015226586
(43) Veröffentlichungstag der Anmeldung: 31.10.2018
(73) Patentinhaber: Audi AG, 85045 Ingolstadt (DE)
(72) Erfinder: HÉLOT, Jacques, 85051 Ingolstadt (DE)
(86) Internationale Anmeldenummer: PCT/EP2016/081104
(87) Internationale Veröffentlichungsnummer: WO 2017/108552

(56) Entgegenhaltungen:
- DE-A1- 3 310 886
- DE-A1- 19 645 675
- DE-A1-102012 010 884
- FR-A1- 2 315 408
- US-A1- 2009 128 307

## Beschreibung

Die Erfindung betrifft ein Kraftfahrzeug mit einem Schalttafelmodul, das im Bereich eines Kombiinstruments zwischen einer Lenkhandhabe des Kraftfahrzeugs und einer Frontscheibe des Kraftfahrzeugs angeordnet ist. Das Schalttafelmodul weist zumindest ein Bedienelement auf, wobei jedes Bedienelement an einer Seite neben einer Lenksäule der Lenkhandhabe angeordnet ist und sich in länglicher Flügelform von der Lenksäule weg erstrecken kann. Zu der Erfindung gehören auch das Schalttafelmodul selbst sowie ein Verfahren zum Betreiben eines Kraftfahrzeugs.

Aus Sicht des Fahrers können hinter einem Lenkrad neben dem Kombiinstrument zum Anzeigen von Betriebsdaten des Kraftfahrzeugs noch Bedienelemente bereitgestellt sein, die somit beim Führen des Kraftfahrzeugs unmittelbar in Reichweite der Hände des Fahrers liegen, wenn dieser seine Hände am Lenkrad hält. Beispielsweise ist das Schaltelement zum Schalten der Fahrzeugleuchten oftmals in dem besagten Bereich hinter dem Lenkrad angeordnet.

Der besagte Bereich hat sich als besonders günstig zum Bereitstellen von Bedienelementen herausgestellt, da hier ein sicheres Umgreifen vom Lenkrad zu einem Bedienelement nur über eine verhältnismäßig kurze Distanz hinweg nötig ist. Daher möchte man den Bereich zwischen der Lenkhandhabe, beispielsweise dem Lenkrad, und der Frontscheibe besser für die Bereitstellung von Bedienelementen ausnutzen.

Aus der DE 10 2007 020 929 A1 ist bekannt, an einem Lenkrad in einem Kraftfahrzeug eine Eingabeeinrichtung anzuordnen, die um die Lenkradachse drehbar ist und sich in einer beliebigen Drehstellung ortsfest positionieren lässt. Nachteilig hierbei ist, dass die Fläche zum Bereitstellen von Bedienelementen begrenzt ist, da die Eingabeeinrichtung zwischen Lenkrad und Fahrer angeordnet ist und bei zu großer Ausgestaltung das Bedienen des Lenkrades erschwert.

Aus der US 2014/0043269 A1 ist ein Kraftfahrzeug bekannt, das einen Touchscreen aufweist, der an einer Schiene horizontal entlang einer Fahrzeugquerrichtung zwischen dem Fahrer und dem Beifahrer verschoben werden kann, um von diesen beiden Personen bedient werden zu können. Die Schiene ist an einer Schalttafel des Kraftfahrzeugs angeordnet. Nachteilig bei dieser Lösung ist, dass das Touchpad nicht beliebig weit hinter das Lenkrad geschoben werden kann, weil es dann den Blick auf das Kombiinstrument, das heißt die Anzeigeeinrichtung, die der Fahrer durch die Speichen des Lenkrads hindurch betrachten können muss, blockiert ist.

Weiteren relevanten Stand der Technik zeigt die US2009/0128307 A1.

Der Erfindung liegt die Aufgabe zugrunde, den Raum zwischen Lenkrad und Frontscheibe des Kraftfahrzeugs effizient zum Bereitstellen von Bedienelementen zu nutzen, die flexibel in Abhängigkeit vom Fahrmodus (Einsteigen, selbst Fahren, pilotiertes Fahren) und/oder an eine Sitzposition und Körperstatur des Fahrers angepasst werden können.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung und die Figuren offenbart.

Die Erfindung umfasst ein Kraftfahrzeug aufweisend ein zwischen einer Lenkhandhabe und einer Frontscheibe angeordnetes Schalttafelmodul mit zumindest einem Bedienelement. Eine andere Bezeichnung für Schalttafel ist auch Armaturenbrett. Unter einer Lenkhandhabe ist im Zusammenhang mit der Erfindung insbesondere ein Lenkrad oder ein anderes Griffelement zu verstehen, das für einen Fahrer zum Querführen des Kraftfahrzeugs vorgesehen ist und/oder das an einer drehfest im Kraftfahrzeug angeordneten Lenksäule drehbar oder rotierbar gelagert ist. Unter einer Lenksäule ist somit derjenige drehfeste Teil zu verstehen, an welchem die Lenkhandhabe drehbar gelagert ist. Jedes Bedienelement ist jeweils an einer Seite neben der Lenksäule der Lenkhandhabe angeordnet, also rechts oder links neben der Lenksäule gesehen aus der Perspektive des Fahrers.

Das zumindest eine Bedienelement des Schalttafelmoduls ist jeweils um eine Rotationsachse rotierbar und/oder zumindest entlang einer Fahrzeuglängsrichtung des Kraftfahrzeugs bezüglich eines Gehäuses des Schalttafelmoduls und damit bezüglich eines Fahrersitzes des Kraftfahrzeugs bewegbar angeordnet oder gelagert. Entsprechend ist bei dem Schalttafelmodul auch eine Aktoreinrichtung zum Bewegen des zumindest einen Bedienelements bereitgestellt. Die Aktoreinrichtung kann hierzu beispielsweise einen Elektromotor aufweisen. Eine Steuereinrichtung des Schalttafelmoduls ist dazu eingerichtet, durch Ansteuern der Aktoreinrichtung das zumindest eine Bedienelement jeweils in Abhängigkeit von einem zumindest Freigabesignal in eine Freigabestellung zu verfahren. Mit Freigabestellung ist hierbei gemeint, dass ein dem Fahrer zur Verfügung stehender Platz im Fahrgastraum maximiert wird oder das Bedienelement verstaut oder verdeckt ist, wenn sich das zumindest eine Bedienelement jeweils in seiner Freigabestellung befindet. Die Steuereinrichtung ist des Weiteren dazu eingerichtet, in Abhängigkeit von zumindest einem Stellungssignal das zumindest eine Bedienelement jeweils aus seiner Freigabestellung heraus in eine zu dem jeweiligen Stellungssignal korrespondierende Gebrauchsstellung bevorzugt näher zum Fahrersitz hin zu verfahren. Mit korrespondierender Gebrauchsstellung ist gemeint, dass zu jeder Gebrauchsstellung ein vorbestimmtes Stellungssignal vorgegeben oder definiert ist. Es kann also vorgesehen sein, dass nur ein einziges Stellungssignal vorbestimmt ist, durch welches bewirkt wird, dass die Aktoreinrichtung das zumindest eine Bedienelement in eine korrespondierende Gebrauchsstellung näher zum Fahrersitz fährt. Es können aber auch mehrere Stellungssignale für unterschiedliche Gebrauchsstellungen vorgesehen sein, von denen jede näher zum Fahrersitz hin angeordnet ist als die Freigabestellung.

Durch die Erfindung ergibt sich der Vorteil, dass dem Fahrer zwischen Lenkhandhabe und Frontscheibe mit jedem Bedienelement Anzeigeeinheiten und/oder Betätigungseinheiten (z.B. Schalter) bereitgestellt werden können, die während der Fahrt durch Einstellen einer entsprechenden Gebrauchsstellung dem Fahrer nahe an dessen Hand dargeboten oder angeboten werden können, während der Fahrer die Lenkhandhabe hält. Dabei ist aber verhindert, dass sich der Freiraum des Fahrers durch die vergrößerte Anzahl an Anzeigeeinheiten und/oder Betätigungseinheiten verringert. Hierzu wird in Abhängigkeit von dem zumindest einen Freigabesignal die Freigabestellung durch das zumindest eine Bedienelement eingenommen, sodass dem Fahrer Freiraum zum Bewegen, beispielsweise zum Aussteigen, zur Verfügung steht. An einem solchen Bedienelement kann beispielsweise die Bedienung der Leuchten und/oder der Fahrerassistenz durch entsprechende Betätigungseinheiten ermöglicht sein. Ein weiteres Bedienelement kann beispielsweise für die Bedienung des Infotainmentsystems (Informations-Unterhaltungssystem) und/oder der Klimatisierungseinrichtung bereitgestellt sein.

Eine Weiterbildung sieht vor, dass das zumindest eine Bedienelement jeweils einen berührungssensitiven Bildschirm aufweist, das heißt einen Touchscreen. Bevorzugt sind zwei Bedienelemente dieser Art (insbesondere genau zwei) vorgesehen. Die Steuereinrichtung ist dazu eingerichtet, zumindest eine pixelbasierte graphische Betätigungseinheit oder eine graphische Bedienfläche auf dem Bildschirm anzuzeigen (also beispielsweise ein Icon oder einen graphischen Schieberegler oder einen sogenannten Button) und jeweils über die Bedienfläche eine Nutzereingabe zu empfangen. Die Betätigungseinheiten in Form graphischer Bedienflächen werden also auf einem Touchdisplay oder Touchscreen dargeboten. Hierdurch ergibt sich der Vorteil, dass abwechselnd unterschiedliche Bedienflächen präsentiert werden können, wodurch der auf jedem Bedienelement zur Verfügung stehende Platz effizienter ausgenutzt werden kann.

Eine Weiterbildung sieht vor, dass das zumindest eine Bedienelement jeweils zumindest bereichsweise von einem Gehäuse des Schalttafelmoduls derart umgeben ist, dass zwischen dem Gehäuse und dem Bedienelement ein Spalt ausgebildet ist. Das Gehäuse ist also nicht verfahrbar oder anders herum ist jedes Bedienelement bezüglich des Gehäuses bewegbar oder verfahrbar, indem das jeweilige Bedienelement in der beschriebenen Weise entlang der Fahrzeuglängsrichtung bewegt wird. Eine Spaltbreite des Spalts ist damit durch die aktuelle Stellung des jeweiligen Bedienelements festgelegt, wobei eine Komforteinrichtung des Kraftfahrzeugs dazu eingerichtet ist, durch den Spalt hindurch in den Fahrgastraum des Kraftfahrzeugs zu wirken. Je breiter der Spalt ist, desto mehr Einfluss hat also die Komforteinrichtung auf den Fahrgastraum. Umgekehrt hat mit geringerer Spaltbreite die Komforteinrichtung weniger Einfluss auf den Fahrgastraum. Die geringste Spaltbreite ergibt sich dabei insbesondere, wenn jedes Bedienelement in der Freigabestellung angeordnet ist. Je weiter jedes Bedienelement von der Freigabestellung weg hin zum Fahrersitz verfahren ist, desto größer wird dann insbesondere die Spaltbreite. Hierdurch ergibt sich der Vorteil, dass bei Gebrauch des Schalttafelmoduls, wenn jedes Bedienelement aus der Freigabestellung heraus in eine Gebrauchsstellung verfahren ist, auch die Komforteinrichtung in den Fahrgastraum hinein wirkt. Hierdurch ist also das Einstellen der Spaltbreite kombiniert mit dem Einstellen der Stellung jedes Bedienelements.

So ist gemäß einer Weiterbildung vorgesehen, dass die besagte Komforteinrichtung eine Belüftungseinrichtung umfasst und durch die Spaltbreite ein durchströmbarer Querschnitt eines Luftauslassbereichs der Belüftungseinrichtung festgelegt ist. Hierdurch wird also in bauraumsparender Weise jedes Bedienelement als Ventilelement für den Luftauslassbereich verwendet. Zusätzlich oder alternativ dazu kann vorgesehen sein, dass die Komforteinrichtung eine Ambientebeleuchtung umfasst, welche Licht aus dem Spalt heraus in den Fahrgastraum strahlt. Mit Ambientebeleuchtung ist hierbei gemeint, dass keine sogenannte Spot-Beleuchtung oder gezielte, gerichtete Beleuchtung eines vorbestimmten Bereichs vorgesehen ist, sondern Licht diffus und/oder indirekt in den Fahrgastraum hineingestreut wird. Hierzu kann eine Diffusoreinrichtung vorgesehen sein, beispielsweise eine aufgeraute und/oder getrübte Oberfläche, durch die hindurch das Licht in den Fahrgastraum abgestrahlt wird. Die Lichtmenge wird hierbei in vorteilhafter Weise durch die Stellung des zumindest einen Bedienelements eingestellt.

Eine Weiterbildung sieht vor, dass das zumindest eine Bedienelement jeweils translatorisch ausschließlich entlang der Fahrzeuglängsrichtung verschiebbar gelagert ist. Hierdurch ergibt sich der Vorteil, dass eine rundum verlaufende Fuge oder ein rundum verlaufender Spalt um das Bedienelement bereitgestellt werden kann. Alternativ dazu sieht eine Weiterbildung vor, dass das zumindest eine Bedienelement jeweils um eine Drehachse verschwenkbar gelagert ist. Hierdurch lässt sich das Bedienelement in einer Schwenkbewegung zum Lenkrad hin verschwenken und es ergibt sich hierdurch zugleich eine Annäherung des bezüglich der Lenksäule äußeren oder entfernten Endes jedes Bedienelements an die Lenkhandhabe. Eine Weiterbildung sieht vor, dass das zumindest eine Bedienelement jeweils um eine Rotationsachse, die parallel zu einer Fahrzeugquerrichtung ausgerichtet ist, um sich selbst rotierbar gelagert ist. Hierdurch kann eine Bedienoberfläche des Bedienelements verstaut werden und somit vor einer mechanischen Beschädigung geschützt werden.

Eine Weiterbildung sieht vor, dass das zumindest eine Bedienelement als ein in ein Gehäuse des Schalttafelmoduls einfahrbares und aus dem Gehäuse ausfahrbares Stempelteil oder Kolbenteil ausgestaltet ist. Hierdurch kann beispielsweise der beschriebene umlaufende Spalt bereitgestellt werden. Ein weiterer Vorteil eines starren Stempelteils ist, dass es eine starre Oberfläche zum Bereitstellen von Betätigungseinheiten oder zum Tragen solcher Betätigungseinheiten aufweist. Beispielsweise kann es als ein Schlittenteil ausgestaltet sein, das aus dem Gehäuse herausgleiten und in das Gehäuse hineingleiten kann. Das Stempelteil kann also wie eine Gondel in dem Gehäuse bewegt werden. Eine Weiterbildung sieht vor, dass eine gesamte Bedienfront rechts und links neben der Lenksäule durch ein einziges Stempelteil gebildet ist, das entlang der Fahrzeuglängsrichtung aus dem Gehäuse des Schalttafelmoduls ausgefahren und zurück in die Freigabestellung eingefahren werden kann. Hierdurch behalten sämtliche durch das Schalttafelmodul bereitgestellten Betätigungseinheiten ihre relative Lage zueinander unabhängig von der aktuellen Stellung des Bedienelements bei.

Die Erfindung sieht vor, dass das zumindest eine Bedienelement über eine flexible, transparente Abdeckscheibe an einem Mittelteil des Schalttafelmoduls gehalten ist, sodass jedes Bedienelement ein um eine Drehachse verschwenkbares Flügelelement darstellt. Durch eine einheitliche transparente Abdeckscheibe, welche die gesamte Sichtfront des Schalttafelmoduls abdecken kann, kann eine fugenlose Optik bereitgestellt werden. Diese wird auch dann beibehalten, wenn das zumindest eine Bedienelement, d.h. in jeder Stellung des zumindest einen Bedienelements. So können beispielsweise zwei Bedienelemente je eines rechts und eines links neben der Lenksäule (aus der Sicht des Fahrers oder des Fahrersitzes) bereitgestellt werden, die über einen Mittelteil als Brückenelement verbunden sind, wobei die Bedienelemente und der Mittelteil von derselben fugenlosen Abdeckscheibe abgedeckt sind. An die Abdeckscheibe kann beispielsweise ein berührungssensitiver Bildschirm jedes Bedienelements als Schichtaufbau angeklebt sein.

In Bezug auf den beschriebenen Mittelteil oder Brückenteil sieht eine nicht der Erfindung entsprechende

Weiterbildung vor, dass in dem Mittelteil die Abdeckscheibe biegesteif z.B. durch ein Stützelement gehalten ist und die jeweilige Drehlagerung des zumindest einen Bedienelements durch die Abdeckscheibe selbst gebildet ist, indem die jeweilige Drehachse des zumindest einen Bedienelements in einer Oberfläche der Abdeckscheibe angeordnet ist und die Oberfläche zu einer Fahrzeughochachse hin geneigt ausgerichtet ist. Ein Normalenvektor der Oberfläche weist also schräg nach oben. Durch Ausfahren oder Bewegen des von der Lenksäule abgewandten oder entfernten Endes jedes Bedienelements wird dann das Bedienelement um diese Drehachse in Fahrzeuglängsrichtung und dabei zugleich in Richtung der Fahrzeughochachse nach oben verschwenkt, wodurch es eine besonders bediengünstige Gebrauchsstellung einnimmt.

Die Erfindung sieht zudem vor, dass die Abdeckscheibe in dem Mittelteil biegbar gehalten ist, also nicht biegesteif durch ein Stützelement gehalten ist, sondern beispielsweise nur an zwei Aufhängungen gehalten ist, sodass sich bei dieser Weiterbildung die Abdeckscheibe auch im Mittelteil verbiegt, wenn das zumindest eine Bedienelement aus der Freigabestellung in eine Gebrauchsstellung verfahren oder bewegt wird. Hierdurch ergibt sich der Vorteil, dass die Abdeckscheibe bruchgesichert ist, da sich größere Biegeradien als bei einem biegesteif gehaltenen Mittelteil ergeben. Ein weiterer Vorteil besteht darin, dass eine virtuelle, frei im Raum angeordnete Biegeachse oder Drehachse realisiert werden kann, die sich außerhalb der Oberfläche der Abdeckscheibe, insbesondere zwischen Abdeckscheibe und Fahrzeugsitz, ergibt. Hierdurch ist es auch bei geneigter Oberfläche der Abdeckscheibe möglich, ein Verschwenken jedes Bedienelements ausschließlich in einer horizontalen Ebene zu realisieren, also keine Veränderung der Lage des Bedienelements in Bezug auf die Fahrzeughochachse zu benötigen, wenn zwischen den Stellungen umgestellt wird.

Zum Festlegen der Drehachse ist insbesondere vorgesehen, dass die Abdeckscheibe über zumindest zwei Laschen, insbesondere aber über genau zwei Laschen, als jeweilige Aufhängung gehalten ist. Dies hat sich als besonders aufwandsarme Aufhängung für die Abdeckscheibe zum Realisieren eines gewünschten Drehachsenverlaufs erwiesen.

In Bezug auf das Steuern der Aktoreinrichtung zum Bewegen oder Verstellen des zumindest einen Bedienelements gibt es eine Weiterbildung, die vorsieht, dass die Steuereinrichtung dazu eingerichtet ist, als ein Freigabesignal ein Zündung-aus-Signal und/oder ein Aktivitätssignal eines Autopiloten zu empfangen. Dann wird also beim Abstellen oder Ausschalten des Kraftfahrzeugs und/oder beim Aktivieren eines Autopiloten, wenn die Bedienung über das zumindest eine Bedienelement nicht nötig ist, die Freigabestellung angefahren, sodass dem Fahrer mehr Raum zur Verfügung steht.

Zusätzlich oder alternativ dazu kann die Steuereinrichtung dazu eingerichtet sein, als das zumindest eine Stellungssignal zum Einstellen einer Gebrauchsstellung des zumindest einen Bedienelements außerhalb der Freigabestellung ein Zündung-ein-Signal und/oder ein Annäherungssignal zu empfangen. Mit Einschalten des Kraftfahrzeugs wird somit eine Gebrauchsstellung für den Gebrauch des zumindest einen Bedienelements angenommen. Das Annäherungssignal signalisiert eine Annäherung einer Hand einer Person an das zumindest eine Bedienelement. Hierdurch wird also bei Annäherung der Hand an das zumindest eine Bedienelement dieses Bedienelement aus der Freigabestellung heraus näher an die Hand der Person herangeführt. Zusätzlich oder alternativ dazu kann auch ein Sitzstellungssignal eines Fahrersitzes empfangen werden. Verstellt also eine Person den Fahrersitz, so wird korrespondierend auch die Gebrauchsstellung des zumindest einen Bedienelements durch ein entsprechendes Stellungssignal angepasst. Hierdurch ergibt sich somit eine Gebrauchsstellung des zumindest einen Bedienelements in Abhängigkeit von einer Sitzposition des Fahrersitzes. Anstelle einer Anpassung in Abhängigkeit von einem Annäherungssignal kann auch vorgesehen sein, dass bei in der Freigabestellung angeordnetem zumindest einem Bedienelement eine Gestenbedienung zum Bedienen der durch das zumindest eine Bedienelement bereitgestellten Betätigungseinheiten aktiv ist.

Eine Weiterbildung betrifft das Problem, dass bei heutigen Kraftfahrzeugen zwischen der Lenkhandhabe und der Frontscheibe zumindest ein Lenkstockhebel an der Lenksäule des Kraftfahrzeugs angeordnet ist. Dieser kann im Weg sein, wenn das zumindest eine Bedienelement erfindungsgemäß bereitgestellt wird. Die Weiterbildung sieht deshalb vor, dass ein gesamter Zwischenraum zwischen der Lenkhandhabe und dem zumindest einen Bedienelement blockadefrei ausgestaltet ist, also insbesondere kein Lenkstockhebel an der Lenksäule angeordnet ist. Stattdessen ist an der Lenkhandhabe selbst, also beispielsweise dem Lenkrad, an einer dem zumindest einen Bedienelement zugewandten Seite zumindest ein Flügelschaltelement, also beispielsweise ein Kippschalter mit einem Stellflügel, oder zumindest ein Lenkstockhebelelement angeordnet. Indem das Lenkstockhebelelement und/oder das zumindest eine Flügelschaltelement an der Lenkhandhabe selbst angeordnet ist, dreht sich jeweils dieses Element bei einer Drehung der Lenkhandhabe mit dieser mit. Dies ist ein entscheidender Unterschied zum Lenkstockhebel, der an einer Lenksäule und sich nicht mit der Lenkhandhabe mitdreht angeordnet ist. Durch diese Weiterbildungen ist es dem Fahrer ermöglicht, von der Lenkhandhabe aus stets zu dem zumindest einen Bedienelement umzugreifen, ohne dass seine Finger durch einen Lenkstockhebel blockiert werden.

Wie bereits ausgeführt, gehört zu der Erfindung auch das Schalttafelmodul für das Kraftfahrzeug. Es weist das zumindest eine Bedienelement auf, das jeweils an einer Seite eine Aussparung zum Anordnen des Schalttafelmoduls an einer Lenksäule des Kraftfahrzeugs aufweist. Das zumindest eine Bedienelement ist jeweils um eine Rotationsachse rotierbar und/oder zumindest entlang einer vorbestimmten Verfahrrichtung bewegbar angeordnet, wobei diese Verfahrrichtung im bestimmungsgemäßen Einbauzustand des Schalttafelmoduls im Kraftfahrzeug der Fahrzeuglängsrichtung entspricht. Eine Aktoreinrichtung des Schalttafelmoduls ist zum jeweiligen Bewegen des zumindest einen Bedienelements bereitgestellt, wobei die besagte Steuereinrichtung des Schalttafelmoduls dazu eingerichtet ist, durch Ansteuern der Aktoreinrichtung das zumindest eine Bedienelement jeweils in Abhängigkeit von zumindest einem Freigabesignal in eine vorbestimmte Freigabestellung und in Abhängigkeit von zumindest einem Stellungssignal aus der Freigabestellung heraus in eine zu dem Stellungssignal korrespondierende Gebrauchsstellung aus einem Gehäuse des Schalttafelmoduls auszufahren.

Die Erfindung sieht des Weiteren ein Verfahren zum Betreiben eines Kraftfahrzeugs gemäß der Erfindung vor. Bei in einem Fahrersitz des Kraftfahrzeugs sitzender Person wird zumindest eine vorbestimmte Gebrauchssituation erkannt und bei erkannter Gebrauchssituation zumindest ein an einer jeweiligen Seite neben einer Lenksäule des Kraftfahrzeugs angeordnetes Bedienelement eines Schalttafelmoduls zu der Person hin bewegt und/oder ihr zugewendet, wobei zumindest eine vorbestimmte Freigabesituation erkannt wird und bei erkannter Freigabesituation das zumindest eine Schalttafelelement von der Person weg in eine Freigabestellung bewegt und/oder von der Person abgewendet wird, sodass mehr Bewegungsfreiraum für die Person geschaffen wird. Beispielsweise kann als Freigabesituation das Abschalten des Kraftfahrzeugs und/oder das Öffnen einer Fahrzeugtür oder das Aktivieren eines Autopiloten erkannt werden. So wird dem Fahrer in vorteilhafter Weise Bewegungsfreiraum verschafft, wenn er diesen gemäß der definierten Freigabesituation benötigt. Genauso kann erfindungsgemäß eine Gebrauchssituation erkannt werden und bei erkannter Gebrauchssituation das zumindest eine Bedienelement aus der Freigabestellung heraus wieder näher zu der Person hin bewegt und/oder ihr zugewendet werden. Ein Starten des Kraftfahrzeug und/oder das deaktivieren eines Autopiloten des Kraftfahrzeugs ist z.B. eine solche Gebrauchssituation.

Im Folgenden sind Ausführungsbeispiele der Erfindung beschrieben. Hierzu zeigt:
- Fig. 1: eine schematische Darstellung eines Armaturenbretts einer Ausführungsform des erfindungsgemäßen Kraftfahrzeugs mit einem Schalttafelmodul gemäß der Erfindung,
- Fig. 2: eine schematische Darstellung einer alternativen Ausführungsform des Schalttafelmoduls,
- Fig. 3: eine schematische Darstellung einer weiteren alternativen Ausführungsform des erfindungsgemäßen Schalttafelmoduls,
- Fig. 4: eine schematische Darstellung einer weiteren Ausführungsform des erfindungsgemäßen Schalttafelmoduls,
- Fig. 5: eine schematische Darstellung einer weiteren nicht der Erfindung entsprechenden Ausführungsform des erfindungsgemäßen Schalttafelmoduls mit einer Abdeckscheibe und verschwenkbaren Bedienelementen,
- Fig. 6: eine schematische Darstellung einer weiteren Ausführungsform des erfindungsgemäßen Schalttafelmoduls, wobei ein Mittelteil der Abdeckscheibe biegbar gelagert ist,
- Fig. 7: eine schematische Darstellung des Schalttafelmoduls von Fig. 6 mit einer Veranschaulichung von Laschen zum Festlegen von Drehachsen der Abdeckscheibe,
- Fig. 8: eine schematische Explosionszeichnung einer Rückansicht einer Lenkhandhabe, d.h. eine vom Fahrer abgewandte Seite der Lenkhandhabe,
- Fig. 9: eine schematische Darstellung der Lenkhandhabe aus der Sicht des Fahrers,
- Fig. 10: eine schematische Darstellung einer Ausführungsform des erfindungsgemäßen Kraftfahrzeugs mit rotierbar angeordneten Bedienelementen in der Freigabestellung und
- Fig. 11: eine schematische Darstellung der Ausführungsform von Fig. 10 mit den Bedienelementen in einer Gebrauchsstellung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

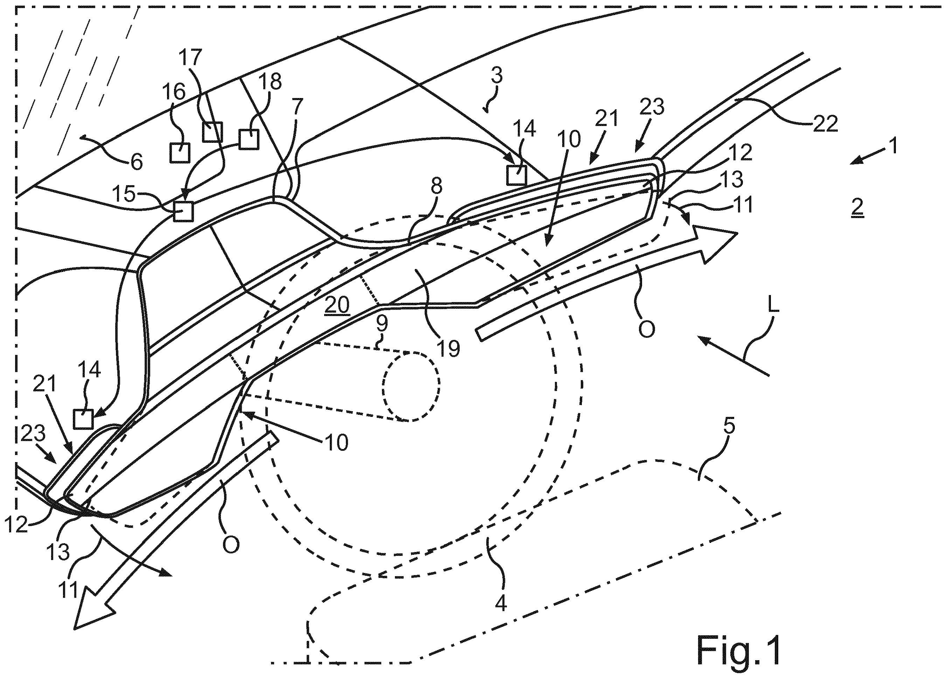

Fig. 1 zeigt von einem Kraftfahrzeug 1 einen Fahrgastraum 2. Bei dem Kraftfahrzeug 1 kann es sich beispielsweise um einen Kraftwagen, insbesondere einen Personenkraftwagen, handeln. Zur besseren Orientierung ist in Fig. 1 eine Fahrzeuglängsrichtung L veranschaulicht, wobei der dargestellte Pfeil vom Fahrzeugheck zur Fahrzeugfront zeigt. Dargestellt sind ein Armaturenbrett 3, ein Lenkrad 4, ein Fahrersitz 5 und eine Windschutzscheibe oder Frontscheibe 6. Das Lenkrad 4 stellt eine Lenkhandhabe dar. Aus Sicht eines (nicht dargestellten) Fahrers im Fahrersitz 5 befindet sich hinter dem Lenkrad 4 ein Kombiinstrument 7. Des Weiteren ist in dem Armaturenbrett 3 ein Schalttafelmodul 8 eingebaut, durch welches neben einer Lenksäule 9 des Lenkrads 4 zwei berührungssensitive Bildschirme oder Touchscreens 10 bereitgestellt sind. Ein Gehäuse des Schalttafelmoduls 8 ist durch das Armaturenbrett 3 verdeckt.

Jeder Touchscreen 10 stellt ein Bedienelement im Sinne der Erfindung dar. Jeder Touchscreen 10 ist durch eine Verfahrbewegung 11 zwischen einer Freigabestellung 12 und einer bezüglich der Freigabestellung 12 näher zum Fahrersitz 5 und/oder Lenkrad 4 angeordnete Gebrauchsstellung 13 aus dem Gehäuse heraus bewegbar. Genauso lässt sich jeder Touchscreen 10 von der Gebrauchsstellung 13 zurück in die Freigabestellung 12 bewegen. Zum Bewegen der Touchscreens 10 ist eine Aktoreinrichtung 14 bereitgestellt, welche beispielsweise auf der Grundlage eines Elektromotors und/oder einer Gewindespindel die zum Ausfahren und Einfahren jedes Touchscreens 10 benötigte motorische Verfahrbewegung 11 erzeugen kann.

Die Aktoreinrichtung 14 wird durch eine Steuereinrichtung 15 des Schalttafelmoduls 8 gesteuert. Die Steuereinrichtung 15 kann beispielsweise auf der Grundlage eines Mikrocontrollers oder Mikroprozessors realisiert sein. Die Steuereinrichtung 15 stellt mittels der Aktoreinrichtung 14 die Freigabestellung 12 ein, falls sie ein vorbestimmtes Freigabesignal 16 von einer anderen Fahrzeugkomponente 18 empfängt. Die andere Fahrzeugkomponente 18 kann beispielsweise ein Steuergerät sein, welches eine entsprechende Freigabesituation erkennt, welche das Einstellen der Freigabestellung 12 erfordert. Eine entsprechende Freigabesituation kann in der bereits beschriebenen Weise definiert sein. Die Steuereinrichtung 15 stellt die Gebrauchsstellung 13 ein, falls sie ein entsprechendes Stellungssignal 17 von der Fahrzeugkomponente 18 empfängt. Die Fahrzeugkomponente 18 kann das Stellungssignal 17 erzeugen, falls sie eine entsprechende Gebrauchssituation erkennt, die ebenfalls in der bereits beschriebenen Weise definiert sein kann. Bevorzugt erkennt die Steuereinrichtung 15 selbsttätig, in welche Position die Touchscreens 10 gestellt werden müssen. Es kann auch eine mechanische Taste oder eine Sensortaste oder ein anderes Berührelement bereitgestellt sein, damit der Benutzer die Stellung der Touchscreens 10 selbst einstellen kann.

Die beiden Touchscreens 10 können dabei insgesamt durch eine Abdeckscheibe 19 verbunden sein, durch welche hindurch der Fahrer die Touchscreens 10 betrachten kann. Durch das Abdecken mittels einer gemeinsamen Abdeckscheibe 19 ergibt sich insgesamt durch die beiden Touchscreens 10 und einen Mittelteil 20 eine gebogene, fugenfreie Oberfläche O. Jeder Touchscreen 10 kann vor einem Luftauslassbereich 21 einer Belüftungseinrichtung des Kraftfahrzeugs 1 angeordnet sein. Es kann vorgesehen sein, ein Ambientelicht 22 bereitzustellen, welches eine Lichtquelle im Luftauslassbereich 21 hinter den Touchscreens 10 vorsieht. Zwischen dem Luftauslassbereich 21 und den Touchscreens 10 ist ein Spalt 23 ausgebildet, dessen Spaltbreite sich mit der Stellung der Touchscreens 10 durch die Bewegung 11 einstellt oder verändert. Der Spalt 23 wird auf einer Seite durch das Gehäuse des Schalttafelmoduls 8 auf der anderen Seite durch jeweils den Touchscreen 10 begrenzt.

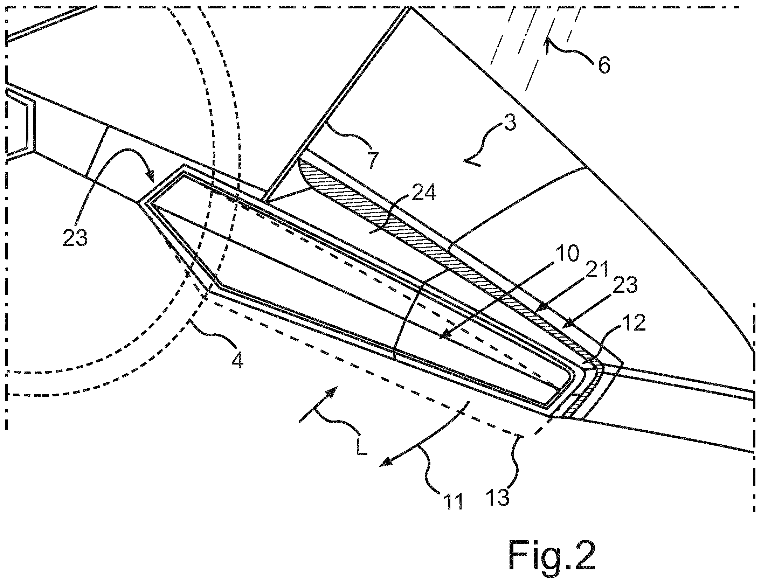

Fig. 2 zeigt eine alternative Ausgestaltung eines Touchscreens 10, durch welche sich ein rundum verlaufender Spalt 23 um jeden Touchscreen 10 ergeben kann. Hierbei ist der Touchscreen 10 als Gondel oder Stempelteil 24 ausgestaltet, welches entlang der Fahrzeuglängsrichtung L rein translatorisch verfahren werden kann.

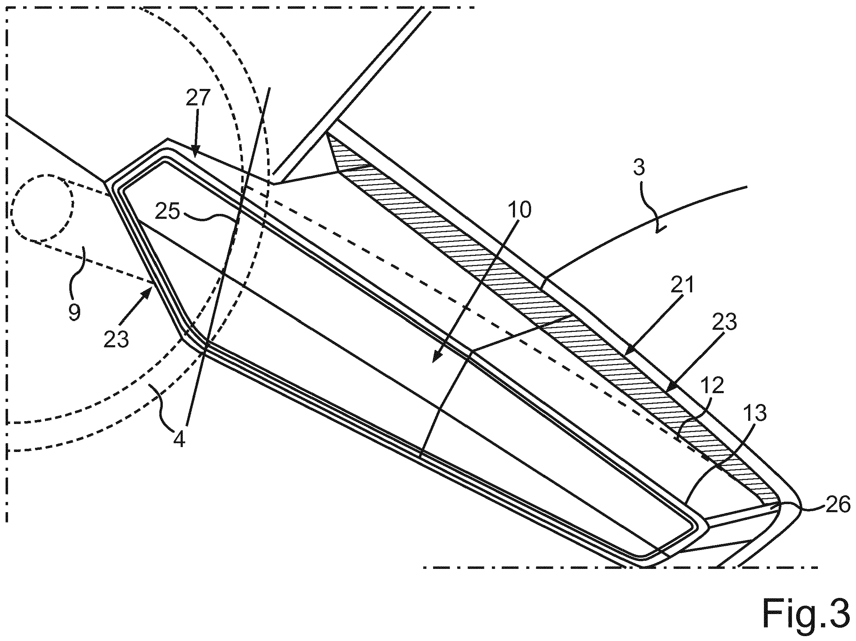

Fig. 3 veranschaulicht, wie der Touchscreen 10 um eine Drehachse 25 drehbar gelagert sein kann, sodass ein Ende 26, welches ausgehend von der Lenksäule ein entferntes Ende des Touchscreens 10 darstellt, bei der Verfahrbewegung 11 eine größere Bewegung ausführt als ein säulennahes Ende 27.

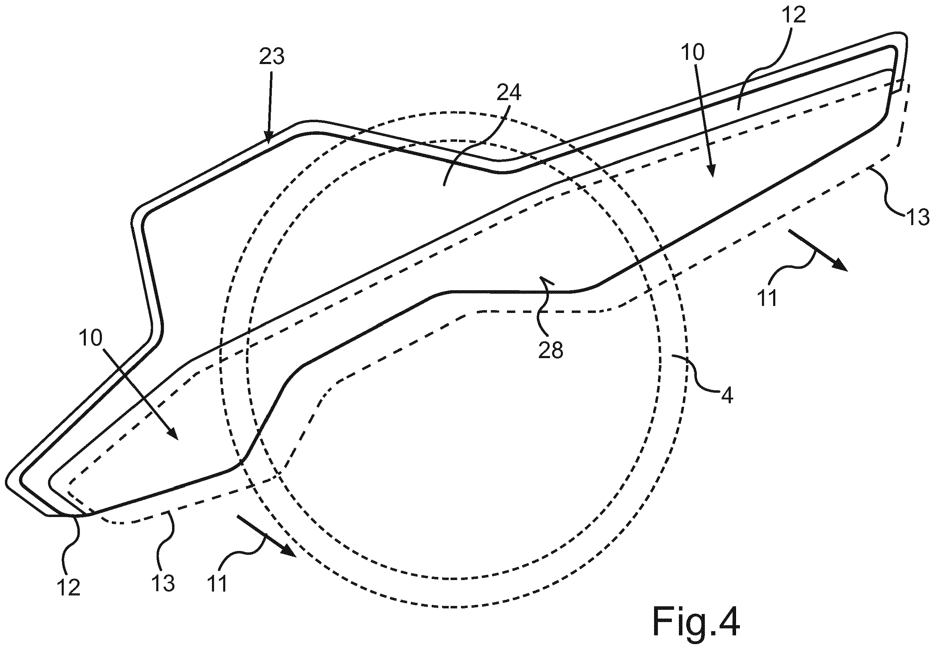

Fig. 4 veranschaulicht eine Ausführungsform, bei welcher ein einzelnes Stempelelement 24 vorgesehen ist, welches beide Touchscreens 10 trägt. Es kann auch vorgesehen sein, dass ein einziger Touchscreen vorgesehen ist, der sich über einen gesamten Frontbereich 28, welcher dem Fahrersitz 5 zugewandt ist, erstreckt.

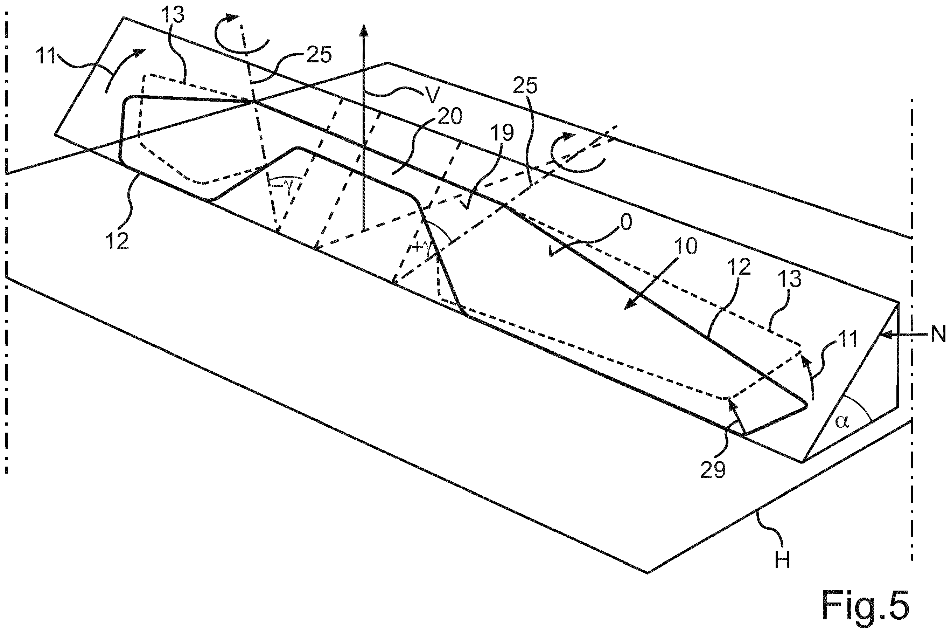

Fig. 5 veranschaulicht, wie mittels der Abdeckscheibe 19 und eines biegesteif gelagerten Mittelteils 20 für jeden Touchscreen 10 eine Drehachse 25 ausgebildet werden kann, welche in einer Ebene der Oberfläche O der Abdeckscheibe 19 liegt. Zur optischen Orientierung ist die Neigung N der geneigten Oberfläche O ebenfalls veranschaulicht. Falls nur die Neigung N um den Winkel α bezüglich einer Vertikalen V vorgesehen ist, gibt es durch die Neigung N der Drehachse 25 bezüglich der Vertikalen V, das heißt bezüglich der Richtung der Fahrzeughochachse, durch die Bewegung 11 einen vertikalen Anteil 29, sodass sich die Touchscreens 10 bezüglich der Freigabestellung 12 in der Gebrauchsstellung 13 von einer horizontalen Ebene H abheben. Falls dies nicht gewünscht ist, kann die Drehachse 25 zusätzlich um dem Winkel γ seitlich geneigt oder gedreht sein, wodurch sich die Touchscreens 10 bei der Bewegung 11 nicht von der Ebene H abheben.

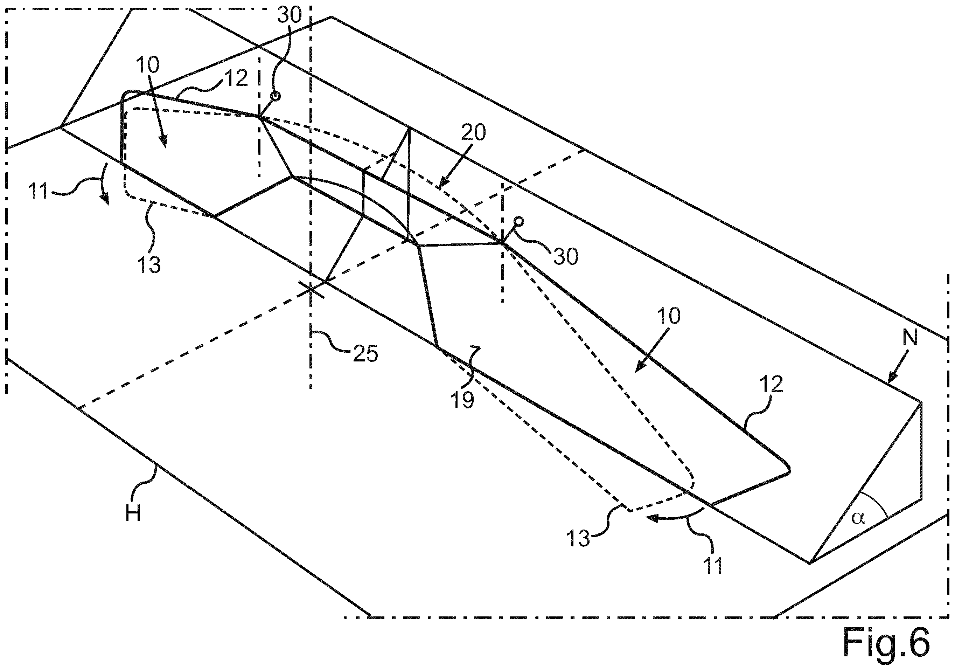

Fig. 6 veranschaulicht im Gegensatz dazu und der Erfindung entsprechend, wie durch einen biegbar oder flexibel gehaltenen Mittelteil 20 eine virtuelle Drehachse 25 realisiert werden kann. Die hierfür nötige Aufhängung 30 kann beispielsweise an den Übergängen zwischen dem Mittelteil 20 und den beiden Touchscreens 10 an der Abdeckscheibe 19 angeordnet sein.

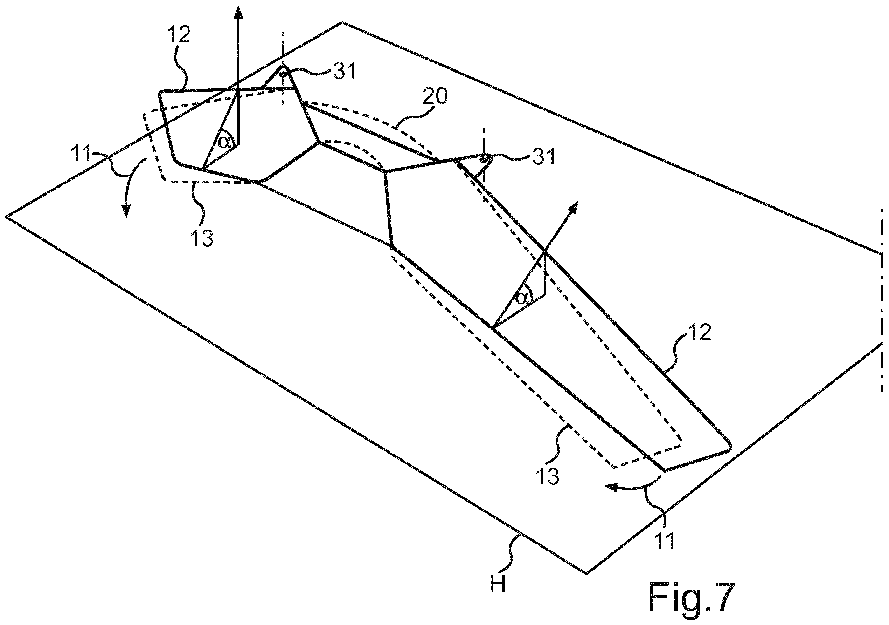

Eine mögliche Realisierung der Aufhängung 30 ist in Fig. 7 veranschaulicht. Hier ist gezeigt, wie die Abdeckscheibe 19 durch zwei Laschenelemente 31 als Aufhängung 30 gehalten werden kann. Durch die ausschließlich horizontale Verfahrbewegung 11 wird der Winkel α zur horizontalen Ebene H nicht verändert.

Es sind somit insgesamt bei dem Kraftfahrzeug 1 links und rechts vom Lenkrad 4 seitliche Touch-Displays oder Touchscreens 10 bereitgestellt, die sich bewegen können. Dies kann nützlich sein zur Verbesserung der optischen Leichtigkeit des Armaturenbretts 3, die Verbesserung der Ergonomie beim Ein- und Aussteigen und beim Fahren (in Abhängigkeit von der Sitzposition und/oder Körpergröße) und die Verbesserung der Ergonomie und das Raumgefühl bei pilotiertem Fahren. Durch das Anpassen der Stellung jedes Touchscreens 10 ist kein Abgleich der Positionierung der Touchscreens 10 für unterschiedliche Fahrsituationen nötig. Die Position oder Stellung jedes Touchscreens 10 kann durch die Verfahrbewegung 11 und die entgegengesetzte Bewegung jederzeit angepasst werden.

Der Touchscreen 10 links vom Lenkrad 4 (aus Sicht des Fahrersitzes 5) kann beispielsweise für Licht- und/oder Fahrassistenzfunktionen vorgesehen sein, indem entsprechende graphische Bedienflächen auf dem Touchscreen 10 angezeigt werden. Der Touchscreen 10 rechts vom Lenkrad kann für die Bedienung des Infotainmentsystems und/oder der Klimatisierungseinrichtung vorgesehen sein. Hier können entsprechende graphische Bedienflächen auf dem Touchscreen 10 angezeigt werden. Bevorzugt haben die Touchscreens im Bereich des säulennahen Endes 27 ihre Drehachse 25, um die sie sich drehen können. So werden die äußeren Enden 26 an das Lenkrad 4 heranbewegt, wenn jeder Touchscreen 10 aus der Freigabestellung 12 in die Gebrauchsstellung 13 bewegt wird.

In der Gebrauchsstellung 13 ist jeder Touchscreen 10 an das Lenkrad 4 heranbewegt, was beim Führen des Kraftfahrzeugs mittels des Lenkrads 4 das Erreichen jedes Touchscreens 10 vereinfacht. Durch Bereitstellen von Gondeln oder Stempelelementen, die frei in dem Gehäuse des Schalttafelmoduls 8 angeordnet sind, ist eine Bewegungsfuge rundum ermöglicht. Auch eine Verschiebung beider Touchscreens 10 durch ein einstückiges Stempelteil (Fig. 4) ermöglicht eine Luftdüse, die auch ein frontales Anblasen des Fahrers zulässt.

Durch ein gemeinsames flächiges Deckglas in Form der Abdeckscheibe 19 ergibt sich der Vorteil, dass in der Frontfläche 28 keine senkrechten Fugen im Lenkradbereich entstehen oder vorhanden sind.

Wie in Fig. 6 und Fig. 7 veranschaulicht, kann das Abdeckglas wie ein Origami gefaltet werden, um im Bereich des Lenkrads 4 zwischen der Freigabestellung 12 und der Gebrauchsstellung 13 verschwenkt zu werden.

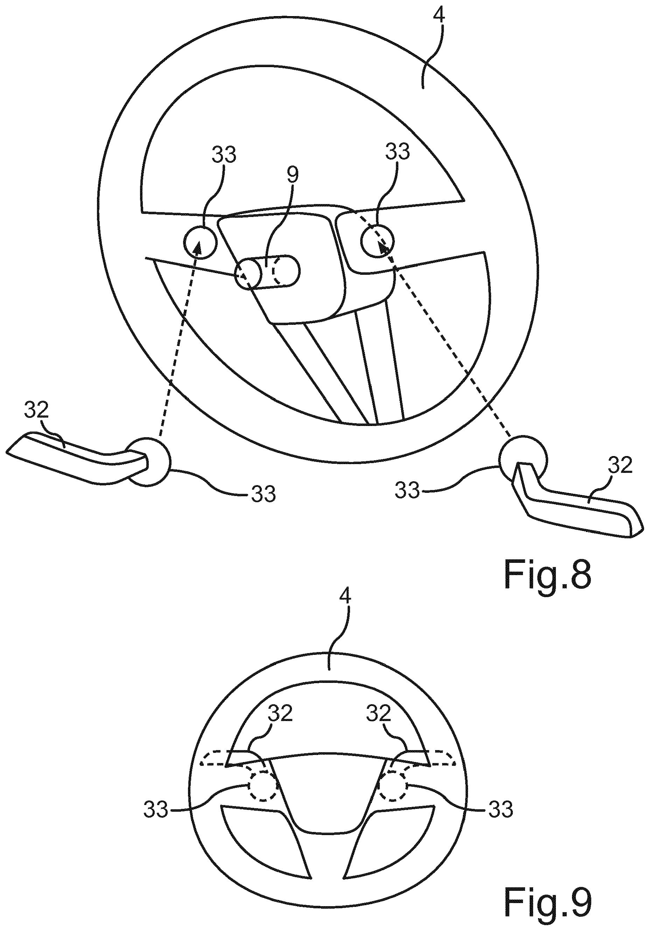

Fig. 8 und Fig. 9 zeigen das Lenkrad 4 in Alleinstellung. An einer dem Fahrer abgewandten Seite können Lenkstockelemente 32 z.B. durch Kugelgelenke 33 gehalten sein.

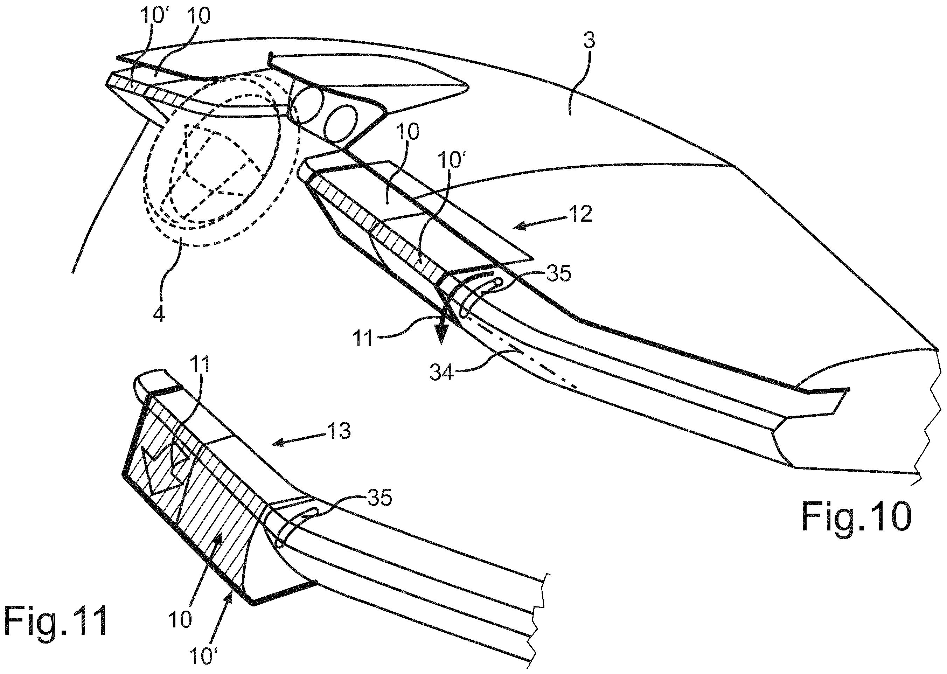

Fig. 10 und Fig. 11 zeigen ein Armaturenbrett 3 mit Touchscreens 10, die durch die Bewegung 11 um eine Rotationsachse 34 zwischen einer Freigabestellung 12 (gezeigt in Fig. 10) und einer Gebrauchsstellung 13 (gezeigt in Fig. 11) rotiert werden. Die Bewegung 11 kann durch eine Schiene oder Kulissenführung 35 geführt sein.

In der Freigabestellung 12 ist jeder Touchscreen 10 vom Fahrer abgewandt, in der Gebrauchsstellung 13 ist er dem Fahrer zugewandt. Es kann an jedem rotierbaren Bedienelement mit Touchscreen 10 noch ein kleiner Touchscreen oder Bildschirm 10' bereitgestellt sein, der in der Freigabestellung 12 des Touchscreens 10 anstelle des Touchscreens 10 zum Ausgeben von Informationen an den Fahrer genutzt werden kann.

Insgesamt wirkt das Schalttafelmodul oder die Frontseite 28 leichter und eleganter gestaltet. Beim Ein- und Aussteigen können die Touchscreens 10 und optional auch das Lenkrad 4 selbst zurückgezogen werden, also vom Fahrersitz 5 wegbewegt werden. So entsteht mehr Platz oder Bewegungsfreiraum. Die Touchscreens 10 können auch zum Fahrersitz 5 hinbewegt werden, wenn durch die Fahrzeugkomponente 18 eine Annäherung einer Hand an die Touchscreens detektiert wird. Die Touchscreens 10 können auch in Abhängigkeit der Sitzposition des Fahrersitzes in Bezug auf ihre Stellung eingestellt werden, sodass also mehr als eine Gebrauchsstellung 13 definiert ist. Die Sitzposition kann durch die Komponente 18 detektiert werden.

Die Touchscreens 10 können bei pilotiertem Fahren, wenn also keine Bedienung der Touchscreens 10 zu erwarten oder nötig ist, vom Fahrersitz 5 wegbewegt werden in die Freigabestellung 12, sodass mehr Bewegungsraum im Fahrgastraum 2 zur Verfügung steht. In diesem Zustand können die Touchscreens 10 beispielsweise über Gestik bedient werden, wobei eine Gestenbedienung beispielsweise durch die Fahrzeugkomponente 18 realisiert werden kann. Auch hier ist eine Annäherungserkennung möglich, um die Touchscreens 10 wieder in eine Gebrauchsstellung 13 zu verfahren.

Insgesamt zeigt das Beispiel, wie durch die Erfindung bewegliche seitliche Touch-Displays in der Instrumententafel bereitgestellt werden können.

## Patentansprüche

1. Schalttafelmodul (8) für ein Kraftfahrzeug (1), aufweisend zumindest ein Bedienelement (10), wobei jedes Bedienelement (10) jeweils an einer Seite einer Aussparung zum Anordnen des Schalttafelmoduls (8) an einer Lenksäule (9) des Kraftfahrzeugs (1) angeordnet ist und das zumindest eine Bedienelement (10) jeweils um eine Rotationsachse (34) rotierbar und/oder zumindest entlang einer vorbestimmten Verfahrrichtung (L) bewegbar angeordnet ist und eine Aktoreinrichtung (14) des Schalttafelmoduls (8) zum jeweiligen Bewegen (11) des zumindest einen Bedienelements (10) bereitgestellt ist, wobei eine Steuereinrichtung (15) des Schalttafelmoduls (8) dazu eingerichtet ist, durch Ansteuern der Aktoreinrichtung (14) das zumindest eine Bedienelement (10) jeweils in Abhängigkeit von zumindest einem Freigabesignal (16) in eine Freigabestellung (12), in welcher der Fahrgastraum maximiert ist, und in Abhängigkeit von zumindest einem Stellungssignal (17) aus der Freigabestellung (12) heraus in eine jeweilige zu dem Stellungssignal (17) korrespondierende Gebrauchsstellung (13) aus einem Gehäuse des Schalttafelmoduls (8) auszufahren,
**dadurch gekennzeichnet, dass**
das zumindest eine Bedienelement (10) über eine flexible, transparente Abdeckscheibe (19) an einem Mittelteil (20) des Schalttafelmoduls (8) als ein um eine Drehachse (25) verschwenkbares Flügelelement gehalten ist, wobei
die Abdeckscheibe (19) in dem Mittelteil (20) biegbar gehalten ist und die Drehachse (25) virtuell, frei im Raum ausgerichtet ist.

2. Schalttafelmodul (8) nach Anspruch 1, wobei das zumindest eine Bedienelement (10) jeweils einen berührungssensitiven Bildschirm (10) aufweist und die Steuereinrichtung (15) dazu eingerichtet ist, zumindest eine pixelbasierte graphische Bedienfläche anzuzeigen und jeweils über die Bedienfläche eine Nutzereingabe zu empfangen.

3. Schalttafelmodul (8) nach einem der vorhergehenden Ansprüche, wobei das zumindest eine Bedienelement (10) jeweils zumindest bereichsweise von einem Gehäuse (3) derart umgeben ist, dass zwischen dem Gehäuse (3) und dem Bedienelement (10) ein Spalt (23) ausgebildet ist, wobei eine Spaltbreite des Spalts (23) durch die aktuelle Stellung (12, 13) des Bedienelements (10) festgelegt ist und wobei eine Komforteinrichtung des Kraftfahrzeugs (1) dazu eingerichtet ist, durch den Spalt (23) hindurch in einen Fahrgastraum (2) hinein zu wirken.

4. Schalttafelmodul (8) nach Anspruch 3, wobei die Komforteinrichtung eine Belüftungseinrichtung umfasst und durch die Spaltbreite ein durchströmbarer Querschnitt eines Luftauslassbereichs (21) der Belüftungseinrichtung festgelegt ist und/oder wobei die Komforteinrichtung eine Ambientebeleuchtung (22) umfasst, welche Licht aus dem Spalt (23) heraus in den Fahrgastraum strahlt.

5. Schalttafelmodul (8) nach einem der vorhergehenden Ansprüche, wobei das zumindest eine Bedienelement (10) jeweils a) translatorisch ausschließlich entlang der Fahrzeuglängsrichtung (L) verschiebbar oder b) um eine Drehachse (25) verschwenkbar oder c) um eine Rotationsachse (34), die parallel zu einer Fahrzeugquerrichtung ausgerichtet ist, um sich selbst rotierbar gelagert ist.

6. Schalttafelmodul (8) nach einem der vorhergehenden Ansprüche, wobei das zumindest eine Bedienelement (10) als ein in ein Gehäuse des Schalttafelmoduls (8) einfahrbares und aus dem Gehäuse ausfahrbares Stempelteil (24) ausgestaltet ist.

7. Schalttafelmodul (8) nach einem der vorhergehenden Ansprüche, wobei die Abdeckscheibe (19) zum Festlegen der Drehachse (25) über zumindest zwei Laschenelemente (31) als Aufhängung (30) gehalten ist.

8. Schalttafelmodul (8) nach einem der vorhergehenden Ansprüche, wobei die Steuereinrichtung (15) dazu eingerichtet ist, als das zumindest eine Freigabesignal (16) ein Zündung-Aus-Signal und/oder ein Aktivitätssignal eines Autopiloten zu empfangen, und/oder wobei die Steuereinrichtung (15) dazu eingerichtet ist, als das zumindest eine Stellungssignal (17) ein Zündung-ein-Signal und/oder ein eine Annäherung einer Hand einer Person an das zumindest eine Bedienelement signalisierendes Annäherungssignal und/oder ein Sitzstellungssignal des Fahrersitzes (5) zu empfangen.

9. Schalttafelmodul (8) nach einem der vorhergehenden Ansprüche, wobei ein gesamter Zwischenraum zwischen der Lenkhandhabe (4) und dem zumindest einen Bedienelement (10) blockadefrei ausgestaltet ist und an der Lenkhandhabe (4) an einer dem zumindest einen Bedienelement (10) zugewandten Seite zumindest ein Flügelschaltelement oder zumindest ein Lenkstockhebelelement angeordnet ist, welches sich jeweils bei einer Drehung der Lenkhandhabe (4) zum Lenken des Kraftfahrzeugs (1) mit der Lenkhandhabe (4) mitdreht.

10. Kraftfahrzeug (1) mit einem Schalttafelmodul (8) nach einem der vorhergehenden Ansprüche, aufweisend ein zwischen einer Lenkhandhabe (4) und einer Frontscheibe (6) angeordnetes Schalttafelmodul (8) mit zumindest einem Bedienelement (10), wobei jedes Bedienelement (10) jeweils an einer Seite neben einer Lenksäule (9) der Lenkhandhabe (4) angeordnet ist und das zumindest eine Bedienelement (10) jeweils um eine Rotationsachse (34) rotierbar und/oder zumindest entlang einer Fahrzeuglängsrichtung (L) des Kraftfahrzeugs (1) bezüglich eines Fahrersitzes (5) bewegbar angeordnet ist und eine Aktoreinrichtung (14) des Schalttafelmoduls (8) zum jeweiligen Bewegen (11) des zumindest einen Bedienelements (10) bereitgestellt ist, wobei eine Steuereinrichtung (15) des Schalttafelmoduls (8) dazu eingerichtet ist, durch Ansteuern der Aktoreinrichtung (14) das zumindest eine Bedienelement (10) jeweils in Abhängigkeit von zumindest einem Freigabesignal (16) in eine Freigabestellung (12), in welcher der Fahrgastraum maximiert ist, und in Abhängigkeit von zumindest einem Stellungssignal (17) aus der Freigabestellung (12) heraus in eine jeweils zu dem Stellungssignal (17) korrespondierende Gebrauchsstellung (13) zu verfahren,
**dadurch gekennzeichnet, dass**
das zumindest eine Bedienelement (10) über eine flexible, transparente Abdeckscheibe (19) an einem Mittelteil (20) des Schalttafelmoduls (8) als ein um eine Drehachse (25) verschwenkbares Flügelelement gehalten ist, wobei
die Abdeckscheibe (19) in dem Mittelteil (20) biegbar gehalten ist und die Drehachse (25) virtuell, frei im Raum ausgerichtet ist.

11. Verfahren zum Betreiben eines Kraftfahrzeugs (1) nach Anspruch 10, wobei bei in einem Fahrersitz (5) des Kraftfahrzeugs (1) sitzender Person zumindest eine vorbestimmte Gebrauchssituation erkannt wird und bei erkannter Gebrauchssituation zumindest ein an einer jeweiligen Seite neben einer Lenksäule (9) des Kraftfahrzeugs (1) angeordnetes Bedienelement (10) eines Schalttafelmoduls (8) zu der Person hin bewegt und/oder ihr zugewendet wird und wobei zumindest eine vorbestimmte Freigabesituation erkannt wird und bei erkannter Freigabesituation das zumindest eine Bedienelement (10) von der Person weg in eine Freigabestellung (12), in welcher der Fahrgastraum maximiert ist, bewegt und/oder von ihr abgewendet wird, so dass mehr Bewegungsfreiraum für die Person geschaffen wird,
**dadurch gekennzeichnet, dass**
das zumindest eine Bedienelement (10) über eine flexible, transparente Abdeckscheibe (19) an einem Mittelteil (20) des Schalttafelmoduls (8) als ein um eine Drehachse (25) verschwenkbares Flügelelement gehalten ist, wobei
die Abdeckscheibe (19) in dem Mittelteil (20) biegbar gehalten ist und die Drehachse (25) virtuell, frei im Raum ausgerichtet ist.

## Claims

1. Control panel module (8) for a motor vehicle (1), having at least one operating element (10), wherein each operating element (10) is arranged in each case on a side of a recess for arrangement of the control panel module (8) on a steering column (9) of the motor vehicle (1), and the at least one operating element (10) is in each case arranged rotatably about an axis of rotation (34) and/or movably at least along a predetermined direction of movement (L), and an actuator device (14) of the control panel module (8) is provided for respective movement (11) of the at least one operating element (10), wherein a control device (15) of the control panel module (8) is configured in order, by activation of the actuator device (14), to move the at least one operating element (10) out of a housing of the control panel module (8) in each case depending upon at least one enable signal (16) into an enable position (12) in which the passenger compartment is maximised, and to move it, depending upon at least one position signal (17), out of the enable position (12) into a respective use position (13) corresponding to the position signal (17),
**characterised in that**
the at least one operating element (10) is held by means of a flexible, transparent cover disc (19) on a central part (20) of the control panel module (8) as a wing element which is pivotable about an axis of rotation (25), wherein
the cover disc (19) is retained flexibly in the central part (20) and the axis of rotation (25) is oriented virtually freely in space.

2. Control panel module (8) according to claim 1, wherein the at least one operating element (10) in each case has a touch-sensitive display screen (10) and the control device (15) is configured to display at least one interface and in each case to receive a user input via the interface.

3. Control panel module (8) according to any of the preceding claims, wherein the at least one operating element (10) in each case is at least partially surrounded by a housing (3) in such a way that a gap (23) is formed between the housing (3) and the operating element (10), wherein a width of the gap (23) is fixed by the current position (12, 13) of the operating element (10) and wherein a comfort device of the motor vehicle (1) is configured in order to act through the gap (23) into a passenger compartment (2).

4. Control panel module (8) according to claim 3, wherein the comfort device comprises a ventilation device and the width of the gap determines a through-flow cross-section of an air outlet region (21) of the ventilation device and/or wherein the comfort device comprises an ambient lighting means (22) which emits light out of the gap (23) into the passenger compartment.

5. Control panel module (8) according to any of the preceding claims, wherein the at least one operating element (10) is in each case a) movable in translation exclusively along the longitudinal direction of the vehicle (L) or b) is pivotable about an axis of rotation (25) or c) about an axis of rotation (34) which is oriented parallel to a transverse direction of the vehicle, in order to be mounted rotatably.

6. Control panel module (8) according to any of the preceding claims, wherein the at least one operating element (10) is configured as a strut part (24) which can be moved into a housing of the control panel module (8) and can be moved out of the housing.

7. Control panel module (8) according to any of the preceding claims, wherein for fixing the axis of rotation (25) the cover disc (19) is retained by means of at least two clip elements (31) as mounting means (30).

8. Control panel module (8) according to any of the preceding claims, wherein the control device (15) is configured to receive, as the at least one enable signal (16), an ignition-off signal and/or an activity signal of an autopilot, and/or wherein the control device (15) is configured to receive, as the at least one position signal (17), an ignition-on signal and/or a proximity signalling the proximity of a person's hand to the at least one operating element signal and/or a sitting position signal of the driver's seat (5).

9. Control panel module (8) according to any of the preceding claims, wherein an entire intermediate space between the steering handle (4) and the at least one operating element (10) is designed to be blockage-free, and on the steering handle (4), on a side facing the at least one operating element (10), at least one wing switching element or at least one steering handle lever element is arranged, which in each case co-rotates with the steering handle (4) during a rotation of the steering handle (4) for steering the motor vehicle (1).

10. Motor vehicle (1) with a control panel module (8) according to any of the preceding claims, having a control panel module (8) arranged between a steering handle (4) and a front disc (6), with at least one operating element (10), wherein each operating element (10) is arranged in each case on a side adjacent to a steering column (9) of steering handle (4), and the at least one operating element (10) is in each case arranged rotatably about an axis of rotation (34) and/or movably at least along a longitudinal direction (L) of the motor vehicle (1) with respect to a driver's seat (5), and an actuator device (14) of the control panel module (8) is provided for respective movement (11) of the at least one operating element (10), wherein a control device (15) of the control panel module (8) is configured in order, by activation of the actuator device (14), to move the at least one operating element (10) in each case depending upon at least one enable signal (16) into an enable position (12) in which the passenger compartment is maximised, and to move it, depending upon at least one position signal (17), out of the enable position (12) into a respective use position (13) corresponding to the position signal (17),
**characterised in that**
the at least one operating element (10) is held by means of a flexible, transparent cover disc (19) on a central part (20) of the control panel module (8) as a wing element which is pivotable about an axis of rotation (25), wherein
the cover disc (19) is retained flexibly in the central part (20) and the axis of rotation (25) is oriented virtually freely in space.

11. Method for operating a motor vehicle (1) according to claim 10, wherein when a person is sitting in a driver's seat (5) of the motor vehicle (1) at least one predetermined usage situation is recognised and, upon recognition of a usage situation, at least one operating element (10) of a control panel module (8) arranged on a respective side adjacent to a steering column (9) of the motor vehicle (1) is moved towards the person and/or is facing the person and wherein at least one predetermined enable situation is recognised and, upon recognition of the enable situation, the at least one operating element (10) is moved away from and/or towards the person into an enable position (12), in which the passenger compartment is maximised, so that more free space for movement is created for the person,
**characterised in that**
the at least one operating element (10) is held by means of a flexible, transparent cover disc (19) on a central part (20) of the control panel module (8) as a wing element which is pivotable about an axis of rotation (25), wherein
the cover disc (19) is retained flexibly in the central part (20) and the axis of rotation (25) is oriented virtually freely in space.

## Revendications

1. Module de tableau de bord (8) pour un véhicule automobile (1), présentant au moins un élément de commande (10), chaque élément de commande (10) étant disposé d'un côté d'une cavité permettant de disposer le module de tableau de bord (8) sur une colonne de direction (9) du véhicule automobile (1), et l'au moins un élément de commande (10) pouvant pivoter autour d'un axe rotatif (34) et/ou étant disposé de façon mobile au moins longitudinalement dans une direction de déplacement prédéterminée (L), et un dispositif actionneur (14) du module de tableau de bord (8) est fourni pour le déplacement (11) respectif de l'au moins un élément de commande (10), un dispositif de commande (15) du module de tableau de bord (8) étant configuré pour que, lorsque le dispositif actionneur (14) est actionné, l'au moins un élément de commande (10), respectivement en fonction d'au moins un signal déclencheur (16), sorte du boîtier du module de tableau de bord (8) dans une position de déclenchement (12) dans laquelle le volume de l'habitacle est maximisé et, en fonction d'au moins un signal de position (17), quitte la position de déclenchement (12) pour passer dans une position d'utilisation (13) respective correspondant au signal de position (17),
**caractérisé en ce que**
l'au moins un élément de commande (10) est fixé à une partie médiane (20) du module de tableau de bord (8), via un opercule (19) transparent souple, sous la forme d'un élément en lame pivotant autour d'un axe de rotation (25), dans lequel
l'opercule (19) est fixé à la partie médiane (20) de façon flexible et l'axe de rotation (25) est virtuellement dirigé librement vers l'habitacle.

2. Module de tableau de bord (8) selon la revendication 1, dans lequel l'au moins un élément de commande (10) présente respectivement un écran tactile (10) et le dispositif de commande (15) est configuré pour afficher au moins une surface de commande graphique par pixels et recevoir une saisie d'utilisateur respectivement via la surface de commande.

3. Module de tableau de bord (8) selon l'une quelconque des revendications précédentes, dans lequel l'au moins un élément de commande (10) est entouré respectivement, au moins partiellement, d'un boîtier (3) de telle façon qu'entre le boîtier (3) et l'élément de commande (10), une fente (23) soit formée, la largeur de la fente (23) étant déterminée par la position réelle (12, 13) de l'élément de commande (10) et dans lequel un dispositif de confort du véhicule automobile (1) est configuré pour agir, à travers la fente (23) jusque dans l'habitacle (2).

4. Module de tableau de bord (8) selon la revendication 3, dans lequel le dispositif de confort comprend un dispositif de ventilation et la largeur de fente détermine une section transversale d'une sortie d'air (21) du dispositif de ventilation pouvant être traversée par le flux d'air et/ou dans lequel le dispositif de confort comprend un éclairage d'ambiance (22) qui émet de la lumière par la fente (23), dans l'habitacle.

5. Module de tableau de bord (8) selon l'une quelconque des revendications précédentes, dans lequel l'au moins un élément de commande (10) peut respectivement a) coulisser dans un mouvement de translation exclusivement dans la direction longitudinale du véhicule (L) ou b) pivoter autour d'un axe de rotation (25) ou c) être disposé de façon à pouvoir pivoter sur lui-même autour d'un axe rotatif (34) qui est dirigé parallèle à la direction transversale du véhicule.

6. Module de tableau de bord (8) selon l'une quelconque des revendications précédentes, dans lequel l'au moins élément de commande (10) a la forme d'une partie de poinçon (24) qui peut être insérée dans un boîtier du module de tableau de bord (8) et retirée dudit boîtier.

7. Module de tableau de bord (8) selon l'une quelconque des revendications précédentes, dans lequel l'opercule (19) est maintenu comme suspension (30) par au moins deux éléments en pattes (31) pour la fixation de l'axe de rotation (25).

8. Module de tableau de bord (8) selon l'une quelconque des revendications précédentes, dans lequel le dispositif de commande (15) est configuré pour que l'au moins un signal déclencheur (16) reçoive un signal de désactivation de l'allumage et/ou un signal d'activité d'un autopilote, et/ou le dispositif de commande (15) est configuré pour que l'au moins un signal de position (17) reçoive un signal d'activation de l'allumage et/ou un signal de rapprochement signalant que la main d'une personne s'approche de l'au moins un élément de commande et/ou un signal de position assise du siège du conducteur (5).

9. Module de tableau de bord (8) selon l'une quelconque des revendications précédentes, dans lequel tout un espace intermédiaire entre le volant (4) et l'au moins un élément de commande (10) est sans blocage et, sur le volant (4), d'un côté tourné vers l'au moins un élément de commande (10), au moins un élément de commande à ailette ou au moins un élément de commande en manette est disposé, qui, lorsque le volant (4) est tourné respectivement pour faire tourner le véhicule automobile (1), tourne avec le volant (4).

10. Véhicule automobile (1) équipé d'un module de tableau de bord (8) selon l'une quelconque des revendications précédentes, présentant un module de tableau de bord (8) disposé entre un volant (4) et un pare-brise (6) comportant au moins un élément de commande (10), dans lequel chaque élément de commande (10) est disposé respectivement d'un côté d'une colonne de direction (9) du volant (4) et l'au moins un élément de commande (10) peut pivoter respectivement autour d'un axe rotatif (34) et/ou être disposé de façon mobile coulissante au moins dans la direction longitudinale (L) de véhicule du véhicule automobile (1) par rapport à un siège du conducteur (5) et un dispositif actionneur (14) du module de tableau de bord (8) est fourni pour le mouvement (11) respectif de l'au moins un élément de commande (10), le dispositif de commande (15) du module de tableau de bord (8) étant configuré pour que, lorsque le dispositif actionneur (14) est actionné, l'au moins un élément de commande (10), respectivement en fonction d'au moins un signal déclencheur (16), sorte dans une position de déclenchement (12) dans laquelle le volume de l'habitacle est maximisé et, en fonction d'au moins un signal de position (17), quitte la position de déclenchement (12) pour passer dans une position d'utilisation (13) correspondant respectivement au signal de position (17),
**caractérisé en ce que**
l'au moins un élément de commande (10) est fixé à une partie médiane (20) du module de tableau de bord (8), via un opercule (19) transparent souple, sous la forme d'un élément en lame pivotant autour d'un axe de rotation (25), dans lequel
l'opercule (19) est fixé à la partie médiane (20) de façon flexible et l'axe de rotation (25) est virtuellement dirigé librement vers l'habitacle.

11. Procédé d'utilisation d'un véhicule automobile (1) selon la revendication 10, dans lequel une personne assise dans un siège du conducteur (5) du véhicule automobile (1) identifie au moins une situation d'utilisation prédéterminée et, dans cette situation d'utilisation prédéterminée, au moins un élément de commande (10) d'un module de tableau de bord (8) disposé d'un côté respectif d'une colonne de direction (9) du véhicule automobile (1) se déplace vers la personne et/ou se tourne vers elle, et dans lequel au moins une situation de déclenchement prédéterminée est identifiée et, dans cette situation de déclenchement identifiée, l'au moins un élément de commande (10) est éloigné et/ou détourné de la personne, dans une position de déclenchement (12) dans laquelle le volume de l'habitacle est maximisé, de sorte que la personne dispose de plus d'espace pour se mouvoir,
**caractérisé en ce que**
l'au moins un élément de commande (10) est fixé à une partie médiane (20) du module de tableau de bord (8), via un opercule (19) transparent souple, sous la forme d'un élément en lame pivotant autour d'un axe de rotation (25), dans lequel
l'opercule (19) est fixé à la partie médiane (20) de façon flexible et l'axe de rotation (25) est virtuellement dirigé librement vers l'habitacle.
